# FASCICULE DE BREVET EUROPEEN

(11) **EP 0 755 846 B1**
(45) Date de publication et mention de la délivrance du brevet: **18.08.1999**
(21) Numéro de dépôt: 96420253.5
(22) Date de dépôt: 25.07.1996
(51) Int. Cl.: B62D 21/11, B60G 7/02, B21D 26/02, B21D 53/88

(54) **Berceau tubulaire pour véhicule automobile**
Rohrförmige Verbundlenkerachse für Kraftfahrzeuge
Tubular twist beam axle for motor vehicles

(30) Priorité: 28.07.1995 FR 9509444
(43) Date de publication de la demande: 29.01.1997
(73) Titulaire: VALLOUREC COMPOSANTS AUTOMOBILES VITRY, 51300 Vitry le Francois (FR)
(72) Inventeur: Valin, Daniel, 51300 Saint-Amand-sur-Fion (FR); Deletombe, Philippe, 51000 Chalon-sur-Marne (FR)
(74) Mandataire: Desolneux, Jean-Paul Charles

(56) Documents cités:
- EP-A- 0 568 251
- EP-A- 0 713 791
- TECHNISCHE MITTEILUNGEN KRUPP, vol. 294a, no. 1, Avril 1994, ESSEN, DE, pages 45-50, XP000446387 A. ELDRED, R. MALKIN, T. BARRINGER: "Vari-Form - a hydroforming technique for manufacturing complex tubular components"

## Description

L'invention concerne un berceau métallique pour véhicule automobile et un procédé de réalisation d'un tel berceau.

Par véhicule automobile on entend tout véhicule motorisé à quatre roues, en particulier les véhicules utilitaires et les voitures de tourisme.

Dans la présente description et dans le présent brevet, on entend par berceau une pièce de structure, généralement métallique, pour véhicule automobile, assurant la liaison directe ou indirecte entre d'une part la caisse du véhicule et d'autre part soit les roues avant soit l'essieu arrière dudit véhicule. Un tel berceau comporte une zone centrale constituée par un profil qui doit avoir une raideur transversale suffisante pour supporter les contraintes de flexion créées par le mouvement des roues, zone centrale sur laquelle sont fixés à chaque extrémité deux bras profilés qui assurent, directement ou indirectement, de chaque côté de cette zone centrale, la liaison avec la caisse et la liaison avec un triangle de roue avant ou l'essieu arrière.

Par triangle de roue avant, on entend dans le présent brevet la pièce traditionnellement appelée triangle ou toute pièce ayant une fonction équivalente à celle d'un triangle.

Le berceau avant d'un véhicule automobile comporte ainsi en général à chacune des deux extrémités de la zone centrale des moyens de liaison à la caisse et des moyens de liaison à un triangle de roue avant. Il comporte de plus en général des moyens d'accrochage pour une biellette anti-couple reliée au moteur, pour une barre anti-dévers et pour la crémaillère de direction du véhicule. Un tel berceau avant doit donc avoir une résistance suffisante pour supporter les efforts de flexion engendrés par le mouvement des roues, la reprise du couple moteur et les efforts provenant de la barre anti-dévers et de la crémaillère de direction. Une autre fonction de ce berceau est d'assurer un amortissement et un filtrage de l'ensemble de ces efforts et des vibrations et bruits qui en résultent pour le confort des passagers du véhicule.

Le berceau arrière d'un véhicule automobile comporte en général à chacune des deux extrémités de la zone centrale des moyens de liaison à la caisse et des moyens de liaison avec le train arrière. Sa fonction principale est d'assurer un second étage de filtration des efforts horizontaux et verticaux et des vibrations et bruits qui en résultent, le premier étage de filtration étant réalisé par le train arrière lui-même, ceci dans le but d'améliorer encore le confort des passagers ; cette solution mettant en oeuvre un berceau arrière est assez coûteuse et est utilisée surtout dans les véhicules dits de haut de gamme. Ce berceau arrière doit également résister mécaniquement aux efforts à filtrer, toutefois ces efforts sont beaucoup moins contraignants que dans le cas du berceau avant.

On connaît déjà de tels berceaux métalliques qui sont constitués de deux demi-coquilles embouties soudées l'une à l'autre longitudinalement. Chaque demi-coquille emboutie présente une zone centrale profilée ouverte en forme transversale de U qui est prolongée à chacune de ses deux extrémités par deux bras profilés ouverts en forme de U, l'ensemble ayant une forme longitudinale en H. Une soudure longitudinale, continue ou non, relie les bords des profils ouverts en U de la zone centrale et des bras de chaque demi-coquille. Les deux bras profilés fermés de chaque extrémité de la zone centrale, constitués des bras profilés ouverts assemblés par la soudure, sont utilisés pour la fixation de la caisse, généralement par deux points de liaison, et l'autre pour la fixation, en un ou plusieurs points de liaison, soit du triangle d'une roue avant soit de l'essieu arrière. La fixation d'autres éléments peut être prévue, par exemple, dans le cas du berceau avant, d'éléments tels que la crémaillère de direction, la biellette anti-couple du moteur et une barre anti-dévers, ceci par l'intermédiaire de moyens d'accrochage.

Un tel berceau présente plusieurs inconvénients. Son procédé de fabrication est coûteux car il nécessite deux opérations d'emboutissage à partir de flans de forme en métal, ce qui génère des pertes de matière. Il faut prévoir en plus pour effectuer la soudure longitudinale une bande de métal sur chaque demi-coquille, laquelle n'a pas d'autre utilité, ce qui conduit à alourdir le berceau et à augmenter son encombrement. La soudure constitue par ailleurs une zone plus vulnérable aux sollicitations répétées imposées au berceau, en particulier les contraintes de flexion générées par le déplacement des roues. Enfin le berceau ainsi réalisé est une pièce fermée, ce qui constitue une difficulté pour fixer de façon commode résistant aux sollicitations les moyens de liaison et d'accrochage décrits précédemment.

On a cherché selon l'invention à remédier à ces inconvénients et à concevoir un berceau métallique permettant, tout en conservant une rigidité suffisante pour reprendre les efforts auxquels il est soumis, de minimiser les pertes de métal pour sa fabrication, de réduire son poids ce qui est très favorable dans le cas d'un véhicule, d'augmenter sa compacité ce qui facilite la conception générale du véhicule, de minimiser les zones soudées vulnérables aux sollicitations répétées, et enfin de permettre une fixation plus robuste des moyens de liaison et d'accrochage.

Le berceau suivant l'invention a une structure tubulaire monobloc métallique, c'est-à-dire qu'il est constitué d'une seule longueur de tube. Préférentiellement il est réalisé en acier.
Le berceau suivant l'invention comporte une zone centrale tubulaire prolongée à chacune de ses deux extrémités par deux bras ayant dans le sens transversal sensiblement la section d'un demi-tube ouvert et formant entre eux au départ de l'extrémité de la zone centrale un angle dièdre inférieur à 180°, les deux bras de chaque extrémité permettant d'assurer directement ou indirectement d'une part la liaison avec la caisse, et d'autre part la liaison soit avec le triangle d'une roue avant soit avec l'essieu arrière du véhicule.

Un tel berceau qui selon l'invention est monobloc tubulaire permet un gain de poids du fait de la grande rigidité de la section tubulaire, en particulier vis-à-vis des efforts de flexion provenant des roues. Sa conception monobloc sans soudure conduit à une grande compacité et à une moindre vulnérabilité aux sollicitations répétées. Enfin sa conception ouverte offre de multiples possibilités simples et robustes de fixation de moyens de liaison et d'accrochage.

La zone centrale a préférentiellement une section tubulaire simple non nécessairement circulaire lui permettant de résister aux sollicitations imposées au berceau. Elle peut être cylindrique, ou cambrée entre ses deux extrémités, c'est à dire présenter un coude entre sa partie centrale et chacune de ses deux extrémités, en fonction des caractéristiques constructives du véhicule. Elle peut avantageusement avoir une section tubulaire expansée entre ses deux extrémités pour augmenter sa rigidité, c'est à dire présenter une section plus grande dans sa partie centrale qu'à ses deux extrémités. Si nécessaire un profil plus complexe mais tubulaire et formé d'un tube déformé, par exemple en U ou en Y, peut être conféré à cette zone centrale pour améliorer sa résistance à certaines sollicitations. L'épaisseur du tube dans la zone centrale n'est pas nécessairement constante ; elle peut être variable pour obtenir une rigidité plus grande uniquement où cela est nécessaire ce qui permet de minimiser le poids de la pièce.

Les quatre bras, deux à chaque extrémité de la zone centrale, ont dans le sens transversal sensiblement la section d'un demi-tube ouvert, la section pouvant être uniforme ou non sur toute la longueur des bras. Préférentiellement, ils ont une forme de U ce qui leur confère une bonne résistance mécanique. Les deux bras de chaque extrémité de la zone centrale sont utilisés pour réaliser la fixation de la caisse, de préférence par l'intermédiaire d'un premier moyen de liaison, et la fixation du triangle d'une roue avant s'il s'agit d'un berceau avant ou de l'essieu arrière du véhicule s'il s'agit d'un berceau arrière, de préférence également par l'intermédiaire d'un deuxième moyen de liaison.

De façon avantageuse le premier moyen de liaison pour la caisse agit en deux points des deux bras de chaque extrémité de la zone centrale.
Les deux bras de chaque extrémité n'ont pas nécessairement la même longueur. Ils ne sont pas non plus nécessairement symétriques l'un de l'autre. L'épaisseur du demi tube n'est pas nécessairement constante sur la longueur des bras : elle peut varier le long du bras pour résister au mieux aux efforts selon leur répartition réelle.

Le berceau monobloc ainsi constitué d'une zone centrale tubulaire prolongée par deux bras ayant sensiblement la section d'un demi-tube ouvert, préférentiellement en forme générale de H, présente une structure qui, du fait qu'elle est ouverte pour les bras, facilite grandement la fixation de la caisse, du triangle de roue avant ou de l'essieu arrière, ainsi que la fixation si cela est nécessaire de moyens d'accrochage pour la crémaillère de direction, la biellette anti-couple du moteur et une barre anti-dévers. Par rapport à la solution connue décrite au début de la présente description, l'invention offre une grande souplesse pour constituer un berceau en permettant une grande variété de moyens de liaison et d'accrochage qui peuvent s'intégrer dans la structure ouverte en donnant une meilleure compacité et une meilleure résistance au berceau.

En particulier les moyens de liaison ou d'accrochage ont avantageusement une partie profilée qui s'emboîte dans le profil de demi-tube ouvert des bras auquel ils sont ensuite assemblés par soudure.

De façon avantageuse le premier moyen de liaison pour la caisse est positionné ou comporte au moins un composant qui est positionné en extrémité d'un des bras de chaque extrémité de la zone centrale. Dans ce cas on donne très avantageusement à l'extrémité des bras correspondants une forme en U aplatie, chaque aile du U comportant un perçage sensiblement central en vis-à-vis de celui de l'autre aile. Un manchon, de diamètre très légèrement inférieur à celui des perçages et de longueur plus grande que la largeur extérieure du U aplati, est placé transversalement au U à l'intérieur des-dits perçages. Les extrémités de ce manchon débordent de chaque aile et sont fixées par soudure sur chacune de ces ailes. Cette conception permet d'adapter directement de préférence sur l'extrémité du bras une suspension élastique du commerce ce qui donne un montage très simple et très compact.

Dans le cas où les sollicitations imposées au berceau selon l'invention sont très élevées, en particulier pour les berceaux avants de véhicule, les deux bras de chaque extrémité peuvent être reliés par un moyen de renfort. Différents types de moyen de renfort peuvent être utilisés.

De façon préférentielle le moyen de renfort de chaque extrémité est une bande de métal emboîtée et soudée à l'intérieur des demi- tubes ouverts des deux bras pour les refermer en totalité ou en partie.

D'autres types de moyen de renfort peuvent être prévus, par exemple ayant un profil emboîté et soudé à l'extérieur ou à l'intérieur du demi-tube ouvert des deux bras pour les refermer en totalité ou en partie. Des renforts plus complexes peuvent être conçus, par exemple en refermant localement par déformation le profil de demi-tube ouvert des bras ou en les associant avec les moyens de liaison ou d'accrochage fixés sur les bras.

La mise en place de moyens de renfort n'atténue en rien les qualités de base de résistance du berceau selon l'invention. En effet les soudures des moyens de renfort ne se situent pas dans l'axe de travail principal du berceau qui est l'axe longitudinal joignant les deux roues et les soudures ne sont donc pas sollicitées par les principaux efforts de flexion.

La mise en place de moyens de renfort ne nuit pas non plus à la qualité de structure ouverte du berceau suivant l'invention. En effet ces renforts peuvent n'être mis en place qu'après avoir équipé le berceau des moyens de liaison ou d'accrochage nécessaires.

L'invention concerne également un procédé de réalisation d'un berceau tubulaire monobloc métallique pour automobile.

Selon l'invention, le procédé met en oeuvre une seule longueur de tube métallique.

Le tube est préférentiellement réalisé en acier. Son épaisseur et sa section ne sont pas nécessairement uniformes.

On réalise sur cette longueur de tube les opérations suivantes :
- on bloque la zone centrale dans des mors de serrage de forme sur une machine telle qu'une presse,
- on réalise sur une première extrémité de la longueur de tube une découpe longitudinale dans un plan sensiblement diamétral en utilisant des moyens de coupe connus non décrits, pour obtenir deux demi-tubes ouverts. La longueur de la découpe est calculée en fonction du plus long des deux bras de cette extrémité de la zone centrale du berceau à fabriquer,
- de la même façon on réalise sur la deuxième extrémité de la longueur de tube une découpe longitudinale dans un plan sensiblement diamétral en utilisant des moyens de coupe connus, la longueur de la découpe étant calculée en fonction du plus long des deux bras de cette extrémité de la zone centrale du berceau à fabriquer, pour obtenir deux demi-tubes ouverts,
- de façon avantageuse les découpes de chaque extrémité sont effectuées simultanément en une seule étape,
- ensuite on forme les deux bras d'une première extrémité de la zone centrale en écartant et en déformant les deux demi-tubes ouverts d'une première extrémité de la longueur de tube par utilisation d'une matrice de forme, la zone centrale étant bloquée dans les mors de serrage. La matrice de forme, mue par des moyens connus tels qu'un verin hydraulique, avance en une ou plusieurs étapes vers cette première extrémité de la longueur de tube et écarte et déforme les deux demi-tubes ouverts jusqu'à ce qu'ils forment entre eux au départ de la zone centrale un angle dièdre inférieur à 180°,
- de la même façon on forme les deux bras de la deuxième extrémité de la zone centrale en écartant et en déformant les deux demi-tubes ouverts de la deuxième extrémité de la longueur de tube par utilisation d'une matrice de forme de façon à ce qu'ils forment entre eux au départ de la zone centrale un angle dièdre inférieur à 180°,
- de façon avantageuse les opérations d'écartement et de déformation des deux extrémités de la longueur de tube sont effectuées simultanément et de préférence en une seule étape,
- la dernière étape consiste à mettre à longueur les bras de chaque extrémité en utilisant des moyens de coupe connus.

Lorsque l'angle d'écartement est important, des encoches régulièrement espacées sont pratiquées par des moyens connus non décrits le long des bords découpés des demi-tubes ouverts, avant l'opération d'écartement, afin d'éviter la formation de fissures lors de l'opération de mise en forme des bras. On peut aussi dans ce cas effectuer l'opération d'écartement des bras en plusieurs fois avec des matrices de forme différentes pour obtenir progressivement la forme voulue.

De façon très avantageuse, on met en forme chaque extrémité du tube avant découpe, ceci par des moyens connus non décrits, pour obtenir une meilleure résistance des bras aux sollicitations mécaniques. De façon préférentielle on confère à chaque extrémité une forme rectangulaire à angles arrondis pour obtenir des bras en forme de U.
La zone centrale peut également être mise en forme pour lui donner une meilleure résistance ou une forme adaptée à la géométrie du véhicule.

Cette mise en forme peut avoir lieu avant ou après les étapes de découpe et de mise en forme des bras décrites précédemment. Par exemple on peut effectuer un cambrage de la zone centrale entre ses deux extrémités, c'est à dire qu'on maintient fixement à l'aide d'un outillage de forme adapté les deux extrémités de cette zone centrale et qu'on déforme le métal pour obtenir un coude entre la partie centrale et chacune des deux extrémités de ladite zone centrale. On peut aussi conférer à la zone centrale un profil plus complexe de tube déformé, par exemple en U ou en Y.

La zone centrale peut également être expansée avant ou après la découpe et la mise en forme des bras. Pour mettre en forme la zone centrale on utilise très avantageusement la technique d'hydroformage, ceci de préférence préalablement à la découpe et à la mise en forme des bras. Pour ce faire on réalise dans une presse les opérations suivantes :
a) on immobilise les deux extrémités de la longueur de tube de départ dans des mors de serrage classiques,
b) on enferme la zone centrale dans des mors dont la forme est fonction du profil expansé que l'on veut obtenir,
c) on réalise l'expansion de la zone centrale par injection d'un fluide à haute pression qui déforme plastiquement la paroi jusqu'à l'appliquer contre les mors de forme de l'opération b, les opérations b) et c) pouvant être conduites ou non simultanément en totalité ou en partie.

Cette technique est très avantageuse dans le cas du berceau suivant l'invention car les extrémités de la longueur de tube servant au serrage, qui sont généralement perdues dans la réalisation de pièces hydroformées, sont dans ce cas utilisées pour la réalisation des bras ce qui minimise la perte de matière.

La dernière opération du procédé suivant l'invention consiste à équiper le berceau avec les moyens de liaison pour la fixation de la caisse et du triangle de roue avant ou de l'essieu arrière, ceci par des techniques connues d'assemblage ; si nécessaire on relie les deux bras de chaque extrémité par des moyens de renfort, comme cela a déjà été décrit ; des moyens d'accrochage peuvent également être prévus, dans le cas d'un berceau avant par exemple.

De façon très avantageuse on modifie l'extrémité d'un bras en U pour la rendre apte à recevoir directement une suspension élastique du commerce pour la liaison avec la caisse, ce qui permet un montage simple et compact ; pour cela on effectue les étapes suivantes :
a) on aplatit en évasant l'extrémité du bras par tout moyen connu pour que les ailes du U soient proches l'une de l'autre
b) on réalise un perçage circulaire de part en part sensiblement au centre de chaque aile
c) on introduit dans ce perçage un manchon tubulaire de diamètre légèrement inférieur à celui dudit perçage dont une extrémité dépasse à l'extérieur de chaque aile
d) on soude le manchon sur chaque aile.

L'exemple et les figures ci-après décrivent de façon non limitative un mode de réalisation du berceau et du procédé suivant l'invention.
La figure 1 est une vue schématique d'un berceau avant suivant l'invention.
La figure 2 est la section AA de la figure 1.
La figure 3 est la coupe CC de la figure 1 à une échelle plus grande.
La figure 4 est la vue partielle suivant la flèche D de la figure 1 à une échelle plus grande.
La figure 5 est la section EE de la figure 1 à une échelle plus grande.
La figure 6 est la section de la longueur de tube de départ du procédé suivant l'invention.
La figure 7 est une vue de la longueur de tube de départ utilisée pour le procédé suivant l'invention.
La figure 8 est une vue schématique de la phase d'hydroformage du procédé suivant l'invention.
La figure 9 est une vue schématique de l'étape de découpe des bras du procédé suivant l'invention.
La figure 10 est une vue schématique de l'étape d'écartement des bras suivant l'invention, en fin de déformation.

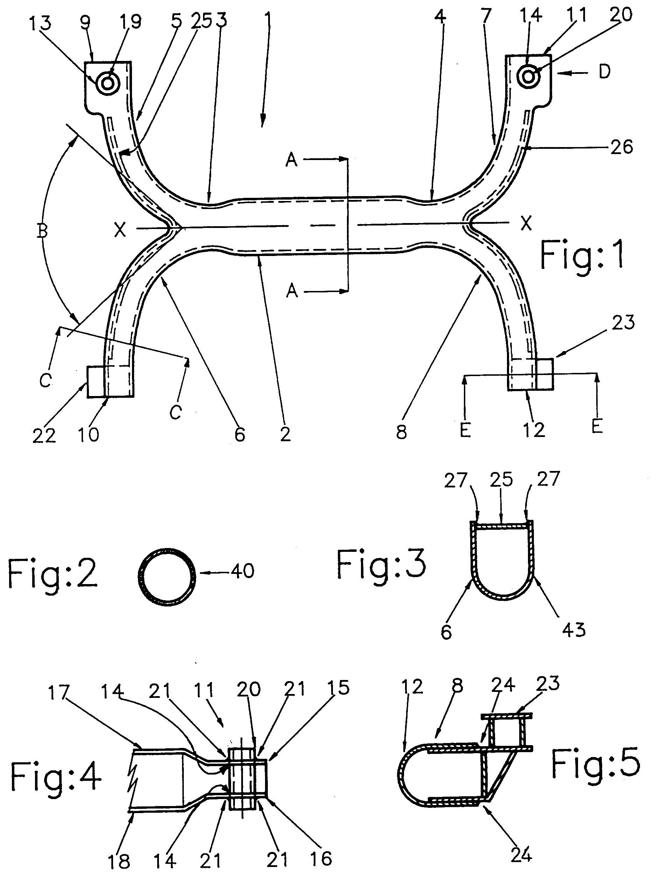

La figure 1 représente de façon schématique un berceau avant 1 monobloc tubulaire suivant l'invention, qui dans le cas de cette réalisation est en forme de H.

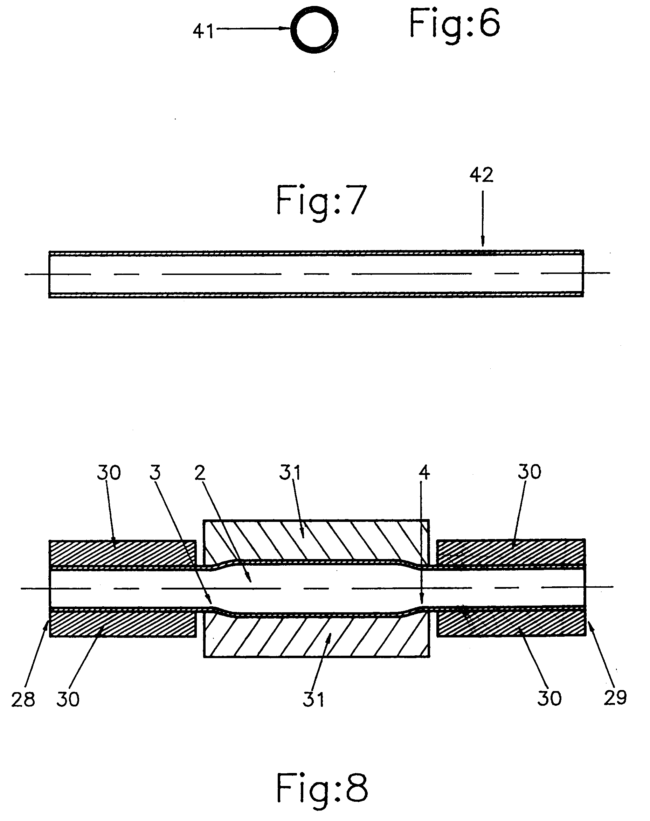

Cette pièce comporte une zone centrale 2 tubulaire de section circulaire expansée entre ses deux extrémités 3, 4, c'est-à-dire que le diamètre de sa partie centrale est plus grand que celui de ses deux extrémités. La figure 2 montre la section 40 selon AA de la partie centrale de la zone expansée, qui est plus grande que la section 41 du tube de départ représentée sur la figure 6. Chaque extrémité 3, 4 de la zone centrale 2 est prolongée par deux bras 5, 6, 7, 8 formant entre eux au départ de l'extrémité 3, 4 de la zone centrale 2 un angle dièdre B d'environ 90°, l'angle B n'étant repéré que sur l'extrémité 3 pour alléger la figure. Les quatre bras 5, 6, 7, 8 ont une forme de demi-tube ouvert en U comme on le voit repère 43 de la figure 3.

Les bras 5 et 7 situés au-dessus de l'axe X-X du berceau avant 1 sont utilisés pour la liaison à la caisse du véhicule. L'extrémité 9, 11 de chacun des bras 5, 7 est aplatie et évasée et comporte en son centre un perçage 13, 14. La figure 4, qui est la vue partielle suivant la flèche D de la figure 1, décrit le détail de l'extrémité 11 du bras 7 dont les parois 15 et 16 sont rapprochées par rapport aux parois 17, 18 du reste du bras 7. Un manchon tubulaire 20 d'une suspension élastique du commerce de diamètre très légèrement inférieur à celui du perçage 14 et de longueur supérieure à la largeur entre ailes 15, 16 de l'extrémité 11, est placé transversalement à l'extrémité 11 à l'intérieur des perçages, une extrémité du manchon 20 dépassant de chaque aile, la fixation étant assurée par soudure 21 sur chaque aile 15, 16.

De la même façon comme on le voit figure 1 le manchon 19 d'une suspension élastique du commerce est fixé sur l'extrémité 9 du bras 5 selon le modèle qui vient d'être décrit.

Les bras 6 et 8 situés en dessous de l'axe X-X du berceau avant 1 sont utilisés pour la liaison au triangle avant d'une roue du véhicule. Un composant 22, 23 est fixé sur l'extrémité 10, 12 de chacun des bras 6, 8. La figure 5, qui est la section suivant EE de la figure 1, décrit le détail de l'extrémité 12 du bras 8 dans lequel on voit que le composant 23 est emboîté dans l'extrémité 12 et fixé par une soudure 24 sur les deux ailes de cette extrémité. Le composant 22 est fixé de la même façon sur l'extrémité 10 du bras 6. Le dessus du composant 23, respectivement 22, est assemblé élastiquement avec un des trois points d'accrochage du triangle de roue avant.

Un renfort 25, 26 constitué d'une bande de métal est emboîté et soudé à l'intérieur des bras pris deux par deux respectivement 5, 6 et 7, 8 pour les refermer entre leurs extrémités 9, 10 et 11, 12. La figure 3, qui est la coupe CC de la figure 1, montre le renfort 25 emboîté dans le profil 43 du bras 6 et fixé sur celui-ci par les soudures 27.

Ce berceau avant 1 est équipé également d'un autre composant de liaison à la caisse, d'un autre composant de liaison au triangle de roue avant, et de différents points d'accrochage en fonction de la conception du véhicule. Ces composants de liaison et points d'accrochage ne sont pas représentés pour ne pas alourdir la figure 1.

La figure 8 illustre schématiquement la première phase du procédé de réalisation du berceau 1 suivant l'invention : il s'agit de l'expansion par hydroformage de la zone centrale 2. On part d'une longueur de tube en acier 42 figure 7 de section circulaire 41 représentée sur la figure 6 dont on immobilise les deux extrémités 28, 29 dans des mors de serrage 30 sur une machine non représentée telle qu'une presse. On enferme la zone centrale 2 entre ses deux extrémités 3, 4 dans des mors 31 dont la forme est calculée pour obtenir le profil expansé 40 de la figure 2. On réalise l'expansion de la zone centrale 2 entre ses extrémités 3, 4 par injection d'un fluide haute pression qui déforme plastiquement la paroi jusqu'au contact avec les mors de forme 31.

Ensuite, après avoir libéré la longueur de tube 42, on confère une forme rectangulaire à angles arrondis aux deux extrémités de cette longueur de tube 42 de part et d'autre des extrémités 3, 4 de la zone centrale 2 en utilisant des moyens classiques de formage.

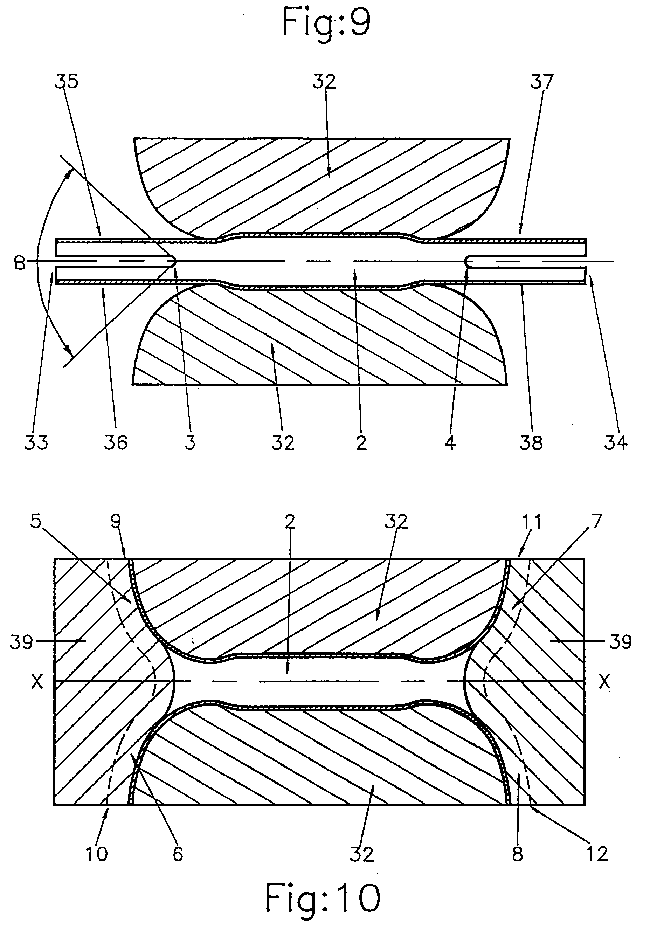

La figure 9 représente schématiquement l'étape suivante du procédé suivant l'invention. Sur une machine non représentée telle qu'une presse on bloque la zone centrale 2 entre ses extrémités 3 et 4 dans des mors de serrage de forme 32 et on réalise simultanément à chaque extrémité de la longueur de tube de départ une découpe 33,34 par des moyens connus non décrits. Chaque découpe 33, 34 qui se situe dans le plan diamétral du tube, s'étend jusqu'à l'extrémité 3, 4 de la zone centrale 2 et délimite deux demi-tubes ouverts 35, 36, 37, 38.

La figure 10 représente schématiquement l'étape suivante du procédé suivant l'invention.

La zone centrale étant toujours immobilisée par les mors 32, on forme les bras 5, 6, 7, 8 en écartant et déformant les demi-tubes ouverts 35, 36, 37, 38, par utilisation de deux matrices de forme 39, mues par des verins hydrauliques non représentés, qui avancent simultanément et progressivement vers les demi-tubes ouverts 35, 36, 37, 38 et les écartent jusqu'à ce qu'ils forment entre eux au départ de la zone centrale un angle dièdre B d'environ 90°, l'angle B n'étant représenté que sur la partie gauche pour ne pas alourdir la figure.

Ensuite les bras 5, 6, 7, 8, sont mis à la longueur voulue de façon connue par des moyens non décrits.
Pour obtenir le berceau avant 1 (figure 1) suivant l'invention il faut ensuite réaliser les étapes suivantes en utilisant des moyens conventionnels non décrits :
a) on aplatit et on évase l'extrémité 9, 11 de chacun des bras 5, 7 situés au-dessus de l'axe X-X pour rapprocher les ailes du U
b) on réalise un perçage circulaire 13, 14 de part en part de chaque extrémité aplatie et en leur centre
c) on introduit dans chaque perçage 13, 14 un manchon 19, 20 de diamètre légèrement inférieur à celui du perçage 13, 14 et dont une extrémité dépasse à l'extérieur de chaque aile du U
d) on soude le manchon 19, 20 sur les ailes du U
e) on emboîte un composant 22, 23 de liaison avec le triangle avant d'une roue dans l'extrémité 10, 12 de chaque bras 6, 8 situé au-dessous de l'axe X-X
f) on soude le composant 22, 23 à l'extrémité 10, 12 de chaque bras 6,8
g) on soude un renfort 25, 26 constitué d'une bande de métal à l'intérieur des bras 5, 6 et 7, 8 deux par deux pour les refermer entre leurs extrémités 9,10 et 11, 12.

Les étapes e) et f) peuvent être effectuées avant l'étape a).

De même l'étape g) peut être effectuée avant l'étape a) ou entre les étapes d) et e).

De nombreuses variantes de l'exemple décrit sont possibles qui ne sortent pas du cadre de l'invention, notamment pour la forme de la zone centrale, la forme des bras, la présence ou non de moyens de renfort, la forme des moyens de renfort, et la façon de réaliser la liaison avec la caisse et avec soit le triangle de roue avant, soit l'essieu arrière.

## Revendications

1. Berceau métallique pour véhicule automobile caractérisé en ce qu'il est monobloc et tubulaire et qu'il comporte une zone centrale tubulaire (2) prolongée à chacune de ses deux extrémités (3, 4) par deux bras (5, 6, 7, 8) ayant dans le sens transversal sensiblement la section d'un demi-tube ouvert et formant entre eux au départ de l'extrémité de la zone centrale un angle dièdre inférieur à 180°, les bras (5, 6, 7, 8) de chaque extrémité permettant d'assurer directement ou indirectement d'une part la liaison avec la caisse, et d'autre part la liaison soit avec le triangle d'une roue avant dans le cas d'un berceau avant, soit avec l'essieu arrière du véhicule, dans le cas d'un berceau arrière.

2. Berceau suivant la revendication 1 caractérisé en ce que la zone centrale (2) est cambrée entre ses extrémités (3, 4), c'est-à-dire présente un coude entre sa partie centrale et chacune de ses extrémités.

3. Berceau suivant une des revendications 1 ou 2 caractérisé en ce que la zone centrale (2) est expansée entre ses extrémités (3, 4), c'est-à-dire présente une section plus grande dans sa partie centrale qu'à ses deux extrémités

4. Berceau suivant la revendication 1 caractérisé en ce que la zone centrale (2) a une forme complexe de tube déformé en U ou en Y

5. Berceau suivant une des revendications 1 à 4 caractérisé en ce que la caisse est fixée aux bras (5, 6, 7, 8) par l'intermédiaire d'un premier moyen de liaison monté sur au moins un bras (5, 7) de chaque extrémité de la zone centrale.

6. Berceau suivant la revendication 5 caractérisé en ce que le premier moyen de liaison est positionné en extrémité d'un des bras (5, 7) de chaque extrémité de la zone centrale.

7. Berceau suivant la revendication 5 caractérisé en ce que le premier moyen de liaison comporte au moins un composant (19, 20) qui est positionné en extrémité d'un des bras (5, 7) de chaque extrémité de la zone centrale.

8. Berceau suivant une des revendications 6 ou 7 caractérisé en ce que l'extrémité (9, 11) d'au moins un bras (5, 7) de chaque extrémité de la zone centrale (2) a une forme en U aplatie, chaque aile (15, 16), comportant un perçage (14) sensiblement central en vis-à-vis de celui de l'autre aile

9. Berceau suivant une des revendications 6 à 8 caractérisé en ce que le premier moyen de liaison avec la caisse comporte au moins une suspension élastique du commerce (19, 20) montée sur l'extrémité (9, 11) du bras (5, 7).

10. Berceau suivant l'une des revendications 1 à 9 caractérisé en ce que le triangle de roue avant dans le cas d'un berceau avant ou l'essieu arrière s'il s'agit d'un berceau arrière est fixé aux bras (5, 6, 7, 8) par l'intermédiaire d'un deuxième moyen de liaison monté sur un bras (6, 8) de chaque extrémité de la zone centrale.

11. Berceau suivant une des revendications 1 à 10 caractérisé en ce que les bras (5, 6, 7, 8) ont une section transversale en forme de U.

12. Berceau suivant une des revendications 1 à 11 caractérisé en ce que les deux bras (5, 6) et (7, 8) de chaque extrémité de la zone centrale (2) sont reliés par un moyen de renfort (25, 26).

13. Berceau suivant la revendication 12 caractérisé en ce que le moyen de renfort (25, 26) est une bande de métal emboîtée et soudée à l'intérieur des demi-tubes ouverts des bras (5, 6) ou (7, 8) de chaque extrémité de la zone centrale (2) fermant ainsi en totalité ou en partie lesdits demi-tubes.

14. Berceau suivant une des revendications 1 à 13 caractérisé en ce qu'il est en acier.

15. Procédé de réalisation d'un berceau métallique pour véhicule automobile caractérisé en ce qu'on met en oeuvre une seule longueur de tube métallique (42) et en ce qu'il comprend les opérations suivantes :
a) on bloque la zone centrale (2) dans des mors de serrage de forme (32)
b) on réalise sur une première extrémité (28) de la longueur de tube (42) une découpe longitudinale (33) dans un plan sensiblement diamétral pour obtenir deux demi-tubes ouverts (35, 36), la longueur de la découpe étant calculée en fonction du plus long des deux bras (5, 6) de cette extrémité (3) de la zone centrale (2) du berceau (1)
c) on réalise sur la deuxième extrémité (29) de la longueur de tube (42) une découpe longitudinale (34) dans un plan sensiblement diamétral pour obtenir deux demi-tubes ouverts (37, 38), la longueur de la découpe étant calculée en fonction du plus long des deux bras (7, 8) de cette extrémité (4) de la zone centrale (2) du berceau (1)
d) on forme les deux bras (5, 6) d'une première extrémité (3) de la zone centrale (2) en écartant et en déformant les deux demi-tubes ouverts (35, 36) d'une première extrémité (28) de la longueur de tube (42) avec une matrice de forme (39) jusqu'à ce qu'ils forment entre eux au départ de la zone centrale (2) un angle dièdre inférieur à 180°.
e) on forme les deux bras (7, 8) de la deuxième extrémité (4) en écartant et en déformant les deux demi-tubes ouverts (37, 38) de la deuxième extrémité (29) de la longueur de tube (42) avec une matrice de forme (39) jusqu'à ce qu'ils forment entre eux au départ de la zone centrale (2) un angle dièdre inférieur à 180°.
f) on découpe à la longueur requise pour le berceau (1) chacun des bras (5, 6, 7, 8).

16. Procédé suivant la revendication 15 caractérisé en ce que les opérations b) et c) sont réalisées simultanément.

17. Procédé suivant une des revendications 15 ou 16 caractérisé en ce que les opérations d) et e) sont réalisées simultanément.

18. Procédé suivant une des revendications 15 à 17 caractérisé en ce que les opérations d) et e) sont réalisées en une seule étape.

19. Procédé suivant une des revendications 15 à 18 caractérisé en ce qu'on met en forme les extrémités (28, 29) de la longueur de tube préalablement à l'opération a).

20. Procédé suivant la revendication 19 caractérisé en ce que l'on donne une forme rectangulaire à angles arrondis à chaque extrémité (28, 29) de la longueur de tube.

21. Procédé suivant une des revendications 15 à 20 caractérisé en ce qu'on met en forme la zone centrale de la longueur de tube après l'opération f).

22. Procédé suivant une des revendications 15 à 20 caractérisé en ce qu'on met en forme la zone centrale de la longueur de tube avant l'opération a).

23. Procédé suivant la revendication 22 caractérisé en ce qu'on met en forme la zone centrale (2) en utilisant la technique d'hydroformage.

24. Procédé suivant la revendication 23 caractérisé en ce qu'on réalise une expansion de la zone centrale (2) de la longueur de tube (42) de départ selon les opérations suivantes :
a) on immobilise les deux extrémités (28, 29) de la longueur de tube (42) dans des mors de serrage classiques(30),
b) on enferme la zone centrale dans des mors (32) dont la forme est fonction du profil expansé que l'on veut obtenir,
c) on réalise l'expansion de la zone centrale (2) par injection d'un fluide à haute pression qui déforme plastiquement la paroi jusqu'à l'appliquer contre les mors de forme (32) de l'étape b), les opérations b) et c) pouvant être conduites ou non simultanément en totalité ou en partie.

25. Procédé suivant une des revendications 15 à 24 caractérisé en ce qu'on relie les bras (5, 6) ou (7, 8) de chaque extrémité deux à deux par un moyen de renfort (25, 26).

26. Procédé suivant la revendication 25 caractérisé en ce qu'on emboîte et on soude une bande de métal à l'intérieur des demi-tubes ouverts des bras (5, 6) ou (7, 8) de chaque extrémité de la zone centrale (2) pour les refermer en totalité ou en partie.

27. Procédé suivant une des revendications 15 à 26 caractérisé en ce qu'on met en oeuvre une longueur de tube (42) en acier.

## Claims

1. Metal sub-frame for a motor vehicle, characterized in that it is one-piece and tubular and in that it has a tubular central region (2) extended at each of its two ends (3, 4) by two arms (5, 6, 7, 8) which, in the transverse direction, have approximately the cross section of an open half tube and form between them, where they leave the end of the central region, a dihedral angle of less than 180°, the arms (5, 6, 7, 8) of each end providing a direct or indirect connection on the one hand with the body and, on the other hand, with either the wishbone of a front wheel, in the case of a front sub-frame, or the rear axle of the vehicle, in the case of a rear sub-frame.

2. Sub-frame according to claim 1, characterized in that the central region (2) has curvature between its ends (3, 4), that is to say that it has a bend between its central part and each of its ends.

3. Sub-frame according to either of claims 1 and 2, characterized in that the central region (2) is expanded between its ends (3, 4), that is to say that it has a larger cross section in its central part than at its two ends.

4. Sub-frame according to claim 1, characterized in that the central region (2) has a complicated shape of a tube deformed into a U or into a Y.

5. Sub-frame according to one of claims 1 to 4, characterized in that the body is secured to the arms (5, 6, 7, 8) using a first connecting means mounted on at least one arm (5, 7) of each end of the central region.

6. Sub-frame according to claim 5, characterized in that the first connecting means is positioned at the end of one of the arms (5, 7) of each end of the central region.

7. Sub-frame according to claim 5, characterized in that the first connecting means comprises at least one component (19, 20) which is positioned at the end of one of the arms (5, 7) of each end of the central region.

8. Sub-frame according to either of claims 6 and 7, characterized in that the end (9, 11) of at least one arm (5, 7) of each end of the central region (2) has the shape of a flattened U, each leg (15, 16) comprising an approximately central hole (14) facing the hole in the other leg.

9. Sub-frame according to one of claims 6 to 8, characterized in that the first means of connection to the body comprises at least one bought-out elastic suspension component (19, 20) mounted on the end (9, 11) of the arm (5, 7).

10. Sub-frame according to one of claims 1 to 9, characterized in that the front wheel wishbone, in the case of a front sub-frame or the rear axle, if it is a rear sub-frame, is secured to the arms (5, 6, 7, 8) by a second connecting means mounted on an arm (6, 8) of each end of the central region.

11. Sub-frame according to one of claims 1 to 10, characterized in that the arms (5, 6, 7, 8) have a U-shaped cross section.

12. Sub-frame according to one of claims 1 to 11, characterized in that the two arms (5, 6) and (7, 8) of each end of the central region (2) are connected by a reinforcing means (25, 26).

13. Sub-frame according to claim 12, characterized in that the reinforcing means (25, 26) is a pressed metal strip fitted and welded inside the open half tubes of the arms (5, 6) or (7, 8) of each end of the central region (2), thus completely or partially closing said half tubes.

14. Sub-frame according to one of claims 1 to 13, characterized in that it is made of steel.

15. Method of producing a metal sub-frame for a motor vehicle, characterized in that use is made of a single length of metal tube (42) and in that it comprises the following operations:
a) the central region (2) is immobilized in shaped clamping jaws (32)
b) a longitudinal cut (33) is made in a first end (28) of the length of tube (42) in an approximately diametral plane in order to obtain two open half tubes (35, 36), the length of the cut being calculated as a function of the longer of the two arms (5, 6) of this end (3) of the central region (2) of the sub-frame (1)
c) a longitudinal cut (34) is made in the second end (29) of the length of tube (42) in an approximately diametral plane in order to obtain two open half tubes (37, 38), the length of the cut being calculated as a function of the longer of the two arms (7, 8) of this end (4) of the central region (2) of the sub-frame (1)
d) the two arms (5, 6) of a first end (3) of the central region (2) are formed by parting and by deforming the two open half tubes (35, 36) of a first end (28) of the length of tube (42) using a shaped die (39) until they form between them, where they leave the central region (2), a dihedral angle of less than 180°
e) the two arms (7, 8) of the second end (4) are formed by parting and by deforming the two open half tubes (37, 38) of the second end (29) of the length of tube (42) using a shaped die (39) until they form between them, where they leave the central region (2), a dihedral angle of less than 180°
f) each of the arms (5, 6, 7, 8) is cut to the required length for the sub-frame (1).

16. Method according to claim 15, characterized in that operations b) and c) are carried out simultaneously.

17. Method according to either of claims 15 and 16, characterized in that operations d) and e) are carried out simultaneously.

18. Method according to one of claims 15 to 17, characterized in that operations d) and e) are carried out in a single step.

19. Method according to one of claims 15 to 18, characterized in that the ends (28, 29) of the length of tube are shaped prior to operation a).

20. Method according to claim 19, characterized in that each end (28, 29) of the length of tube is given a rectangular shape with rounded corners.

21. Method according to one of claims 15 to 20, characterized in that the central region of the length of tube is shaped after operation f).

22. Method according to one of claims 15 to 20, characterized in that the central region of the length of tube is shaped before operation a).

23. Method according to claim 22, characterized in that the central region (2) is shaped using the hydroforming technique.

24. Method according to claim 23, characterized in that the central region (2) of the starting length of tube (42) is expanded using the following operations:
a) the two ends (28, 29) of the length of tube (42) are immobilized in conventional clamping jaws (30),
b) the central region is trapped in jaws (32) the shape of which is a function of the expanded profile to be obtained,
c) the central region (2) is expanded by injecting fluid at high pressure which plastically deforms the wall until it presses against the shaped jaws (32) of step b), it being possible for operations b) and c) to be conducted or not completely or partially simultaneously.

25. Method according to one of claims 15 to 24, characterized in that the arms (5, 6) or (7, 8) of each end are connected in pairs by a reinforcing means (25, 26).

26. Method according to claim 25, characterized in that a strip of metal is fitted and welded inside the open half tubes of the arms (5, 6) or (7, 8) of each end of the central region (2) in order to close them completely or partially.

27. Method according to one of claims 15 to 26, characterized in that use is made of a length of steel tube (42).

## Patentansprüche

1. Metallische Halterung für Kraftfahrzeuge, dadurch gekennzeichnet, daß sie aus einem Stück und rohrförmig ist, und daß sie eine rohrförmige zentrale Zone (2) aufweist, die an jedem ihrer beiden Enden (3, 4) durch zwei Arme (5, 6, 7, 8) verlängert wird, die in Querrichtung im wesentlichen den Querschnitt eines offenen Halbrohres haben und miteinander am Ausgangspunkt vom Ende der zentralen Zone einen Öffnungswinkel von weniger als 180° bilden, wobei die Arme (5, 6, 7, 8) jedes Endes es ermöglichen, direkt oder indirekt einerseits die Verbindung mit dem Wagenkasten und andererseits die Verbindung entweder mit der Dreieckshalterung eines Vorderrads, im Fall einer vorderen Halterung, oder mit der Hinterachse des Fahrzeugs, im Fall einer hinteren Halterung, zu gewährleisten.

2. Halterung nach Anspruch 1, dadurch gekennzeichnet, daß die zentrale Zone (2) zwischen ihren Enden (3, 4) gewölbt ist, d.h. daß sie zwischen ihrem zentralen Bereich und jedem ihrer Enden eine Krümmung aufweist.

3. Halterung nach einem der Ansprüche 1 oder 2, dadurch gekennzeichnet, daß die zentrale Zone (2) zwischen ihren Enden (3, 4) ausgedehnt ist, d.h. daß sie in ihrem zentralen Bereich einen größeren Querschnitt aufweist als an ihren beiden Enden.

4. Halterung nach Anspruch 1, dadurch gekennzeichnet, daß die zentrale Zone (2) eine komplexe Form eines U- oder Y-förmig verformten Rohrs hat.

5. Halterung nach einem der Ansprüche 1 bis 4, dadurch gekennzeichnet, daß der Wagenkasten mittels eines ersten Verbindungsmittels an den Armen (5, 6, 7, (8) befestigt ist, das auf mindestens einen Arm (5, 7) jedes Endes der zentralen Zone montiert ist.

6. Halterung nach Anspruch 5, dadurch gekennzeichnet, daß das erste Verbindungsmittel am Ende eines der Arme (5, 7) jedes Endes der zentralen Zone angeordnet ist.

7. Halterung nach Anspruch 5, dadurch gekennzeichnet, daß das erste Verbindungsmittel mindestens ein Bauteil (19, 20) aufweist, das am Ende eines der Arme (5, 7) jedes Endes der zentralen Zone angeordnet ist.

8. Halterung nach einem der Ansprüche 6 oder 7, dadurch gekennzeichnet, daß das Ende (9, 11) mindestens eines Arms (5, 7) jedes Endes der zentralen Zone (2) die Form eines abgeflachten U aufweist, wobei jeder Schenkel (15, 16) eine im wesentlichen zentrale Bohrung (14) gegenüber derjenigen des anderen Schenkels aufweist.

9. Halterung nach einem der Ansprüche 6 bis 8, dadurch gekennzeichnet, daß das erste Verbindungsmittel mit dem Wagenkasten mindestens eine handelsübliche elastische Aufhängung (19, 20) aufweist, die auf das Ende (9, 11) des Arms (5, 7) montiert ist.

10. Halterung nach einem der Ansprüche 1 bis 9, dadurch gekennzeichnet, daß die Dreieckshalterung des Vorderrads, im Fall eine vorderen Halterung, oder die Hinterachse, im Fall einer hinteren Halterung, an den Armen (5, 6, 7, 8) mit Hilfe eines zweiten Verbindungsmittels befestigt ist, das auf einen Arm (6, 8) jedes Endes der zentralen Zone montiert ist.

11. Halterung nach einem der Ansprüche 1 bis 10, dadurch gekennzeichnet, daß die Arme (5, 6, 7, 8) einen U-förmigen Querschnitt haben.

12. Halterung nach einem der Ansprüche 1 bis 11, dadurch gekennzeichnet, daß die beiden Arme (5, 6) und (7, 8) jedes Endes der zentralen Zone (2) durch ein Verstärkungsmittel (25, 26) miteinander verbunden sind.

13. Halterung nach Anspruch 12, dadurch gekennzeichnet, daß das Verstärkungsmittel (25, 26) ein Metallband ist, das ins Innere der offenen Halbrohre der Arme (5, 6) oder (7, 8) jedes Endes der zentralen Zone (2) eingefügt und angeschweißt ist und so diese Halbrohre vollständig oder teilweise schließt.

14. Halterung nach einem der Ansprüche 1 bis 13, dadurch gekennzeichnet, daß sie aus Stahl ist.

15. Verfahren zur Herstellung einer metallischen Halterung für ein Kraftfahrzeug, dadurch gekennzeichnet, daß eine einzige Länge eines Metallrohrs (42) verwendet wird, und daß es die folgenden Verfahrensschritte aufweist:
a) die zentrale Zone (2) wird in Formgebungs-Spannbacken (32) festgeklemmt,
b) an einem ersten Ende (28) der Rohrlänge (42) wird ein Längsschnitt (33) in einer im wesentlichen diametralen Ebene durchgeführt, um zwei offene Halbrohre (35, 36) zu erhalten, wobei die Länge des Schnitts in Abhängigkeit vom längsten der beiden Arme (5, 6) dieses Endes (3) der zentralen Zone (2) der Halterung (1) berechnet wird,
c) am zweiten Ende (29) der Rohrlänge (42) wird ein Längsschnitt (34) in einer im wesentlichen diametralen Ebene durchgeführt, um zwei offene Halbrohre (37, 38) zu erhalten, wobei die Länge des Schnitts in Abhängigkeit vom längsten der beiden Arme (7, 8) dieses Endes (4) der zentralen Zone (2) der Halterung (1) berechnet wird,
d) die beiden Arme (5, 6) eines ersten Endes (3) der zentralen Zone (2) werden geformt, indem die beiden offenen Halbrohre (35, 36) eines ersten Endes (28) der Rohrlänge (42) mit einer Formmatrix (39) gespreizt und verformt werden, bis sie miteinander am Ausgangspunkt von der zentralen Zone (2) einen Öffnungswinkel von weniger als 180° bilden,
e) die beiden Arme (7, 8) des zweiten Endes (4) werden geformt, indem die beiden offenen Halbrohre (37, 38) des zweiten Endes (29) der Rohrlänge (42) mit einer Formmatrix (39) gespreizt und verformt werden, bis sie miteinander am Ausgangspunkt von der zentralen Zone (2) einen Öffnungswinkel von weniger als 180° bilden,
f) jeder der Arme (5, 6, 7, 8) wird auf die für die Halterung (1) erforderliche Länge abgeschnitten.

16. Verfahren nach Anspruch 15, dadurch gekennzeichnet, daß die Verfahrensschritte b) und c) gleichzeitig durchgeführt werden.

17. Verfahren nach einem der Ansprüche 15 oder 16, dadurch gekennzeichnet, daß die Verfahrensschritte d) und e) gleichzeitig durchgeführt werden.

18. Verfahren nach einem der Ansprüche 15 bis 17, dadurch gekennzeichnet, daß die Verfahrensschritte d) und e) in einem einzigen Schritt durchgeführt werden.

19. Verfahren nach einem der Ansprüche 15 bis 18, dadurch gekennzeichnet, daß die Enden (28, 29) der Rohrlänge vor dem Verfahrensschritt a) in Form gebracht werden.

20. Verfahren nach Anspruch 19, dadurch gekennzeichnet, daß jedem Ende (28, 29) der Rohrlänge eine rechteckige Form mit abgerundeten Ecken verliehen wird.

21. Verfahren nach einem der Ansprüche 15 bis 20, dadurch gekennzeichnet, daß die zentrale Zone der Rohrlänge nach dem Verfahrensschritt f) in Form gebracht wird.

22. Verfahren nach einem der Ansprüche 15 bis 20, dadurch gekennzeichnet, daß die zentrale Zone der Rohrlänge vor dem Verfahrensschritt a) in Form gebracht wird.

23. Verfahren nach Anspruch 22, dadurch gekennzeichnet, daß die zentrale Zone (2) mittels der Hydroforming-Technik in Form gebracht wird.

24. Verfahren nach Anspruch 23, dadurch gekennzeichnet, daß eine Ausdehnung der zentralen Zone (2) der Ausgangs-Rohrlänge (42) gemäß den folgenden Verfahrensschritten durchgeführt wird:
a) die beiden Enden (28, 29) der Rohrlänge (42) werden in üblichen Klemmbacken (30) festgeklemmt,
b) die zentrale Zone wird in Spannbacken (32) eingeschlossen, deren Form vom gewünschten ausgedehnten Profil abhängt,
c) die Ausdehnung der zentralen Zone (2) wird durch Injektion eines Hochdruckfluids durchgeführt, das die Wand plastisch verformt, bis sie gegen die Formbacken (32) des Schritts b) anliegt, wobei die Verfahrensschritte b) und c) vollständig oder teilweise gleichzeitig durchgeführt werden können oder auch nicht.

25. Verfahren nach einem der Ansprüche 15 bis 24, dadurch gekennzeichnet, daß die Arme (5, 6) oder (7, 8) jedes Ende durch ein Verstärkungsmittel (25, 26) paarweise miteinander verbunden werden.

26. Verfahren nach Anspruch 25, dadurch gekennzeichnet, daß ein Metallband ins Innere der offenen Halbrohre der Arme (5, 6) oder (7, 8) jedes Endes der zentralen Zone (2) eingefügt und angeschweißt wird, um sie vollständig oder teilweise zu verschließen.

27. Verfahren nach einem der Ansprüche 15 bis 26, dadurch gekennzeichnet, daß eine Rohrlänge (42) aus Stahl verwendet wird.
